# EUROPÄISCHE PATENTSCHRIFT

(11) **EP 4 128 484 B1**
(45) Veröffentlichungstag und Bekanntmachung des Hinweises auf die Patenterteilung: **22.04.2026**
(21) Anmeldenummer: 21701796.1
(22) Anmeldetag: 25.01.2021
(51) Int. Cl.: H02K 15/10, H01B 1/24, H01B 1/04, H02K 3/02, H02K 15/0414, H02K 15/0421, H02K 3/12

(54) **ELEKTRISCHE MASCHINE MIT BIEGESCHLAFFEN ELEKTRISCHEN LEITERN UND FORMGEBENDEN ISOLIERUNGEN**
ELECTRIC MACHINE WITH FLEXIBLE ELECTRICAL CONDUCTORS AND SHAPING INSULATIONS
MACHINE ÉLECTRIQUE À CONDUCTEURS ÉLECTRIQUES SOUPLES ET À ISOLATIONS DE FAÇONNAGE

(30) Priorität: 30.03.2020 DE 102020204136
(43) Veröffentlichungstag der Anmeldung: 08.02.2023
(73) Patentinhaber: Robert Bosch GmbH, 70442 Stuttgart (DE)
(72) Erfinder: PRIEBE, Patrick, 30457 Hannover (DE); KREUTZKAMP, Sven, 30519 Hannover (DE)
(86) Internationale Anmeldenummer: PCT/EP2021/051569
(87) Internationale Veröffentlichungsnummer: WO 2021/197679

(56) Entgegenhaltungen:
- EP-A2- 1 154 543
- WO-A1-2007/124985
- WO-A1-2018/177767
- WO-A1-2018/210479
- JP-A- 2020 018 169

## Beschreibung

### Stand der Technik

Die vorliegende Erfindung betrifft eine elektrische Maschine mit einem Rotor und einem Stator. Rotor und/oder Stator weisen eine Steckwicklung auf, die aus biegeschlaffen elektrischen Leitern und formgebenden Isolierungen gebildet sind. Die vorliegende Erfindung betrifft außerdem ein Verfahren zur Herstellung von elektrischen Leiterelementen für eine Steckwicklung für einen Rotor und/oder einen Stator einer elektrischen Maschine.

Ferner betrifft die vorliegende Erfindung eine Formgebungsvorrichtung zur Herstellung von elektrischen Leiterelementen für eine Steckwicklung für einen Rotor und/oder einen Stator einer elektrischen Maschine.

Im Wandel von der Verwendung von fossilen Brennstoffen hin zu erneuerbaren Energien ist auch die Antriebsart von Fahrzeugen in den Vordergrund gerückt. Durch die Verschärfung von gesetzlichen Vorgaben zu den Schadstoffemissionen von Fahrzeugen, hat sich in den letzten Jahren die Entwicklung von alternativen Fahrzeugantrieben beschleunigt.

Dabei nimmt die Entwicklung von rein elektrischen Antrieben eine zunehmend stärkere Rolle in der Entwicklung von nachhaltigen Antriebsantrieben für Fahrzeuge ein. Automobilhersteller entwickeln dabei elektrische Antriebsmaschinen weiter, um eine effiziente und alltagstaugliche Alternative zum Verbrennungsmotor zu bieten.

Insbesondere die Wickeltechnik für die Spulenwicklungen eines Stators und eines Rotors einer elektrischen Maschine beeinflusst wesentlich die Leistung und die Effizienz der elektrischen Maschine. Deshalb stellt auch das Spulenwickelverfahren einen Schwerpunkt in der Herstellung und Entwicklung von Hochleistungsspulenwicklungen für elektrische Maschinen für Fahrzeugantriebe dar.

Aus der WO 2007/124985 A1 ist bekannt, die Statorwicklung einer elektrischen Maschine mittels Stecktechnik zu bilden. Dabei werden isolierte Leiterelemente in einen Statorkörper eingesetzt. Die einzelnen eingesetzten Leiterelemente werden anschließend miteinander verschaltet, um die Wicklung des jeweiligen Stators zu bilden. Um die gewünschte Form der einzelnen Leiterelemente zu erhalten, werden die isolierten Leiterelemente vor dem Einsetzen in den Statorkörper durch mehrere Biegevorgänge in ihre gewünschte Form gebogen. Die Leiterelemente weisen einen elektrisch isolierenden Isolationsmantel auf.

Aus WO 2018/210479 A1, WO 2018/177767 A1 und JP 2020 018169 A sind elektrische Leiter bekannt, die eine Vielzahl von Fasern umfassen und von einem Isolationsmantel umschlossen sind.

### Offenbarung der Erfindung

Die erfindungsgemäße elektrische Maschine weist insbesondere eine optimierte Leistungsdichte auf. Die elektrische Maschine umfasst einen Rotor und einen Stator, wobei der Rotor und/oder der Stator eine Steckwicklung aufweisen. Die Steckwicklung umfasst mehrere starre isolierte elektrische Leiterelemente, wobei die Leiterelemente in Nuten des Stators oder des Rotors angeordnet sind. Dabei stehen Leiterenden aus den Nuten vor, wobei die Leiterenden der Leiterelemente jeweils mit Leiterenden anderer Leiterelemente zur Bildung der elektrischen Steckwicklung verbunden sind. Die Leiterelemente weisen jeweils einen Isolationsmantel auf. Außerdem weist jedes Leiterelement eine Vielzahl von elektrisch leitfähigen biegeschlaffen Fasern auf, die insbesondere ein Leiterstrang von biegeschlaffen Fasern sind. Diese Vielzahl von Fasern wird durch den Isolationsmantel schlauchförmig umschlossen, Der Isolationsmantel ist außerdem derart ausgebildet, dass er dem elektrischen Leierelement eine starre Form verleiht. Der Isolationsmantel ist somit insbesondere schlauchförmig oder hülsenförmig ausgebildet und die biegeschlaffen Fasern sind innerhalb des Isolationsmantels angeordnet. Der Isolationsmantel ermöglicht bevorzugt die Ausbildung von Leiterelementen mit minimiertem Volumen und maximiertem Füllgrad.

Die biegeschlaffen Fasern sind aus Kohlenstoff-Nano-Röhrchen oder Graphen gebildet. Kohlenstoff-Nano-Röhrchen oder Graphen weisen eine besonders hohe elektrische Leitfähigkeit und zugleich eine geringe Dichte auf.

Außerdem ermöglicht der Einsatz von Kohlenstoff-Nano-Röhrchen oder Graphen eine besonders hohe Fülldichte der Leiterelemente und dadurch ein besonders hoher Füllfaktor der elektrischen Maschine. Demzufolge kann die Leistungsdichte der elektrischen Maschine gesteigert werden. Außerdem kann der Materialeinsatz auf Grund der höheren elektrischen Leitfähigkeit der elektrischen Leiter reduziert werden, was zusammen mit der geringen Dichte der Leiter zu einer Reduktion des Gewichts der elektrischen Maschine und zu geringeren Herstellungskosten der elektrischen Maschine führt.

Insbesondere im Gegensatz zur bisherigen Steckwicklung wird somit anstelle eines gebogenen Kupferleiters, der seine Form nach dem Biegevorgang beibehält, eine Vielzahl von elektrisch leitfähigen, biegeschlaffen Fasern eingesetzt. Die Form des Leiterelements wird daher, in Abkehr von den aus dem Stand der Technik bekannten Kupfersteckwicklungen, nicht durch die biegeschlaffen Fasern gegeben, sondern durch den starren Isolationsmantel. Demzufolge ist eine plastische Formgebungseigenschaft, wie es bisher bei Kupferleitern der Fall war, keine notwendige Voraussetzung bei der Wahl des Leitermaterials. Somit wird auch die Verwendung von biegeschlaffen elektrischen Leitern, d.h. den Fasern, ermöglicht, wodurch die Auswahl an Materialien für die elektrischen Leiter wesentlich größer wird. Dies ermöglicht insbesondere den Einsatz der zuvor beschriebenen Materialien mit geringer Dichte, um dadurch das Gewicht der elektrischen Maschine insgesamt zu reduzieren.

Weiterhin kann durch die Verwendung biegeschlaffer Fasern ein höherer Füllfaktor der elektrischen Maschine erreicht werden. Ein biegeschlaffes Material ist im Allgemeinen durch einen geringen Elastizitätsmodul und eine hohe Verformbarkeit infolge geringer Kräfte und Momente gekennzeichnet. In der Regel reicht die eigene Gewichtskraft einer biegeschlaffen Faser aus, um das Material zu verformen.

Dabei weisen biegeschlaffe Fasern keine steife Form auf und können deshalb auch nicht durch einen Biegevorgang eine bestimmte, vordefinierte Form aufgeprägt werden. Sie werden daher innerhalb des formgebenden Isolationsmantels angeordnet, um eine feste Form zu behalten. Im Gegensatz dazu wird ein starres Material dadurch definiert, dass eine feste Formgebung des Materials nach einem Formgebungsverfahren beibehalten werden kann, ohne die Unterstützung eines zusätzlichen Elements oder Materials. Eine wesentliche Veränderung der Form kann nur durch den Einsatz höherer Kräfte bewirkt werden. Hier reicht die eigene Gewichtskraft des Leiters jedenfalls nicht aus.

Die Unteransprüche zeigen bevorzugte Weiterbildungen der Erfindung.

Der Isolationsmantel ist vorteilhafterweise thermisch auf die Vielzahl von biegeschlaffen Fasern aufgeschrumpft. Somit ist eine einfache und kostengünstige Montage des elektrischen Leiterelements erreicht. Besonders vorteilhaft handelt es sich bei dem Isolationsmantel um einen Schrumpfschlauch. Somit ist eine einfache und gleichzeitig zuverlässige Formgebung des elektrischen Leiterelements erreicht.

Besonders vorteilhaft verspannt der Isolationsmantel die Vielzahl von biegeschlaffen Fasern, insbesondere den Leiterstrang. Somit ist in dem Isolationsmantel eine Spannkraft vorhanden. Dies führt zu einer dichten Packung der biegeschlaffen Fasern innerhalb des elektrischen Leiterelements. Somit lassen sich vorteilhaft das oben beschriebene geringe Volumen und der hohe Füllgrad erreichen.

Bevorzugt ist der Isolationsmantel aus einem thermoplastischen Kunststoff, insbesondere aus Polyetheretherketon, gebildet sein. Polyetheretherketon (PEEK) ist ein thermoplastischer Kunststoff, der auf Grund seiner Hochtemperaturbeständigkeit und seiner Beständigkeit gegenüber hoch energetischen elektromagnetischen Wellen für den Einsatz als Isolationsmantel von elektrischen Leiterelementen in elektrischen Maschinen geeignet ist. Denn im Gegensatz zu anderen Kunststoffen, weist Polyetheretherketon einen vergleichsweise hohen Schmelzpunkt auf, weshalb Polyetheretherketon auch bei höheren Betriebstemperaturen der elektrischen Maschine nicht beeinträchtigt wird. Außerdem ist Polyetheretherketon auf Grund seiner thermoplastischen Verformbarkeit auch besonders dazu geeignet, eine starre Formgebung der elektrischen Leiterelemente individuell und flexibel zu bewirken. Das Polyetheretherketon kann beispielsweise durch Erhitzen zu einem im Wesentlichen starren, formgebenden Element bewirkt werden. Dadurch können unterschiedliche Geometrien und Dimensionen der Leiterelemente mit vergleichsweise wenig Aufwand erzeugt werden. Denkbar sind jedoch auch andere Thermoplaste, die entweder bereits eine im Wesentlichen starre Form aufweisen oder mittels eines Verfahrens, beispielsweise durch die Zufuhr von Wärme, ausgehärtet werden können.

Der Isolationsmantel ist in einer bevorzugten Ausgestaltung aus einem Isolationsmaterial gefertigt, das einen negativen Ausdehnungskoeffizienten aufweist. Somit lässt sich der Isolationsmantel einfach und zuverlässig auf die Fasern aufbringen, wobei die Fasern zuverlässig in dem Isolationsmantel gehalten sind. Eine Erwärmung des elektrischen Leiterelements führt somit zu einem festeren Halt des Leiterelements aufgrund der negativen Ausdehnung, d.h. Schrumpfung, des Isolationsmantels.

In einem Ausführungsbeispiel kann jedes Leiterelement U-förmig oder I-förmig ausgebildet sein. Bevorzugt ist außerdem vorgesehen, dass die Leiterelemente einen viereckigen, insbesondere rechteckigen, Querschnitt aufweisen. Durch eine solche Form der Leiterelemente ist die Verschaltung der einzelnen Leiterlemente miteinander in einfacher Weise möglich. Besonders bevorzugt ist ein U-förmiges Leiterelement, da dadurch die Steckwicklungen nur an einem Stirnende des Rotors und/oder des Stators miteinander verschaltet werden müssen, wodurch der Verschaltungsaufwand und somit auch der Herstellungsaufwand der elektrischen Maschine reduziert werden kann. Außerdem kann dadurch die Anzahl an Verbindungsstellen im Rotor und/oder Stator verringert werden, wodurch der Montageaufwand weiter reduziert wird. Außerdem können dadurch die Dimensionen des Gehäuses der elektrischen Maschine reduziert werden, wodurch die Leistungsdichte der elektrischen Maschine weiter gesteigert werden kann.

Die Erfindung betrifft außerdem ein Verfahren, das die Herstellung von Steckwicklungen für Rotoren und/oder Statoren einer elektrischen Maschine verbessert. Dieses Verfahren zur Herstellung von im Wesentlichen starren isolierten elektrischen Leiterelementen für eine Steckwicklung für einen Rotor und/oder einen Stator einer elektrischen Maschine, insbesondere einer elektrischen Antriebsmaschine für ein elektrisch angetriebenes Fahrzeug, weist insbesondere die folgenden Schritte auf:
Zunächst erfolgt ein Umschließen eines Strangs von biegeschlaffen Fasern aus Kohlenstoff-Nanoröhrchen oder Graphen mit einem schlauchförmigen Isolationsmantel unter Bildung eines Leiterelements. Der Isolationsmantel ist bevorzugt thermoplastisch verformbar. Danach erfolgt ein Anordnen des Leiterelements in einer Vertiefung einer Formgebungsvorrichtung. Die Vertiefung ist somit formgebend für das Leiterelement. Anschließend erfolgt ein Erwärmen des Leiterelements in der Vertiefung der Formgebungsvorrichtung mittels mindestens eines Heizelements. Das Erwärmen erfolgt bis auf eine Temperatur, die ein thermisches Aufschrumpfen, insbesondere eine Kontraktion, des Isolationsmantels bewirkt. Somit werden die innerhalb des Isolationsmantels angeordneten Fasern bevorzugt einerseits eng aneinander und andererseits eng an den Isolationsmantel angelegt. Dadurch lassen sich dichte Packungen der Fasern erreichen. Nach dem Erwärmen erfolgt ein Abkühlen des Leiterelementes. Durch das Erwärmen und/oder Abkühlen erfolgt außerdem bevorzugt ein Aushärten des Isolationsmantels, so dass das elektrische Leiterelement die von der Vertiefung vorgegebene Form beibehält. Die Formgebung des Leiterelements erfolgt dabei durch den Isolationsmantel. Durch das Verfahren wird, insbesondere im Gegensatz zum bekannten Biegevorgang von isolierten Kupferleitern, die Formgebung der Leiterelemente nicht durch Biegen erreicht, sondern durch das Anordnen des Isolationsmantels und der biegeschlaffen, elektrisch leitfähigen Fasern in der in der Formgebungsvorrichtung ausgebildete Vertiefung und durch das anschließende Erwärmen des Isolationsmantels. Dabei entspricht die Form der Vertiefung im Wesentlichen der gewünschten Form des Leiterelements. In dem Verfahren wird vorteilhaft die Formgebung und das Isolieren der elektrischen Leiter in einem einzigen Verfahrensschritt durchgeführt, wodurch die Anzahl von Verfahrensschritten reduziert ist. Durch das erfindungsgemäße Verfahren können unterschiedliche Formen der Leiterelemente flexibel, schnell und genau gebildet werden. Dadurch sind unterschiedliche Geometrie und Abmessungen der Leiterelemente durch den Einsatz unterschiedlicher Formgebungsvorrichtungen möglich. Der Isolationsmantel ist vorteilhafterweise vor dem Einbringen der Wärme flexibel und kann ohne den Aufwand von hohen Kräften zerstörungsfrei verformt werden. Dabei behält der flexible Isolationsmantel seine Form nicht ohne die Unterstützung von äußeren Kräfte bei. Im erfindungsgemäßen Verfahren wird der flexible Isolationsmantel vor dem Erwärmen mithilfe der formgebenden Vertiefung in der gewünschten Form gehalten. Der Isolationsmantel ist bevorzugt hülsenförmig oder schlauchförmig. Bevorzugt werden die biegeschlaffen Fasern durch den hülsenförmigen oder schlauchförmigen Isolationsmantel geführt. Der Isolationsmantel kann auch mehrere Segmente umfassen, die entlang des Verlaufs der Vertiefung eingesetzt werden und die biegeschlaffen Fasern abschnittsweise umschließen, bevorzugt jeweils unmittelbar anschließend. Die einzelnen Segmente können bevorzugt durch das Erwärmen stoffschlüssig miteinander verbunden werden. Der Isolationsmantel ist vorzugsweise aus einem thermoplastischen Kunststoff gefertigt, insbesondere aus Polyetheretherketon. Durch das Erwärmen und Abkühlen kann insbesondere ein Aushärtevorgang, bevorzugt mit passiver Temperaturreduktion, durchgeführt werden. Dabei kann die Temperaturreduktion beispielsweise alleine durch die Unterbrechung der Wärmezufuhr bewirkt werden. Außerdem kann der Aushärtevorgang eine aktive Temperaturreduktion umfassen, beispielsweise eine aktive Kühlung, insbesondere durch Kühlelemente und/oder erzwungene Konvektion. Vorzugsweise erfolgt der Aushärtevorgang der Leiterelemente in der Vertiefung der Formgebungsvorrichtung. Insbesondere ein negativer Temperaturkoeffizient des Isolationsmantels bewirkt eine Verspannung der biegeschlaffen Fasern innerhalb des Isolationsmantel und ermöglicht eine Ausfüllung des gesamten Querschnittsvolumens des Leiterelements. Dadurch wird die Form des Leiterelements vollständig ausgebildet, wodurch ein kompaktes Leiterelement mit einer hohen Fülldichte erzeugt wird. Anschließend kann das Leiterelement spannungsfrei aus der Vertiefung der Formgebungsvorrichtung entfernt werden.

### Kurze Beschreibung der Zeichnung

Nachfolgend werden Ausführungsbeispiele der Erfindung unter Bezugnahme auf die begleitende Zeichnung im Detail beschrieben. In der Zeichnung ist:
- Figur 1: eine schematische Ansicht einer elektrischen Maschine gemäß einem Ausführungsbeispiel der Erfindung,
- Figur 2: eine schematische Ansicht eines Stators der elektrischen Maschine gemäß dem Ausführungsbeispiel der Erfindung,
- Figur 3: eine schematische Teilansicht des Stators der elektrischen Maschine gemäß dem Ausführungsbeispiel der Erfindung,
- Figur 4: eine schematische Ansicht eines Schnitts durch ein elektrisches Leiterelement einer Steckwicklung des Stators der elektrischen Maschine gemäß dem Ausführungsbeispiel der Erfindung,
- Figur 4A: eine schematische Ansicht eines Endbereichs des elektrischen Leiterelements einer Steckwicklung des Stators der elektrischen Maschine gemäß dem Ausführungsbeispiel der Erfindung,
- Figur 5: eine schematische Ansicht eines weiteren elektrischen Leiterelements der Steckwicklung des Stators der elektrischen Maschine gemäß dem Ausführungsbeispiel der Erfindung, und
- Figur 6: eine schematische Ansicht einer Formgebungsvorrichtung zum Durchführen eines Herstellungsverfahrens der elektrischen Leiterelemente der Steckwicklung des Stators der elektrischen Maschine gemäß dem Ausführungsbeispiel der Erfindung.

### Ausführungsform der Erfindung

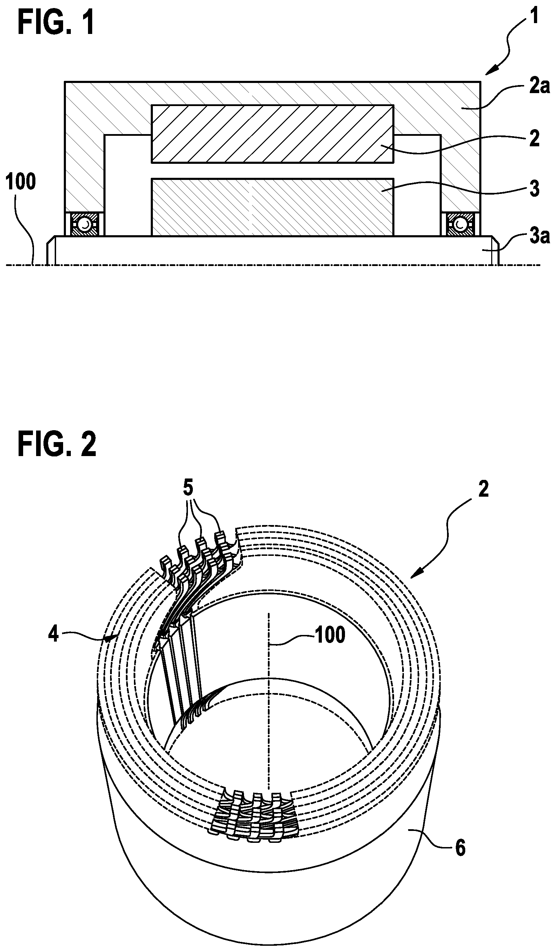

Figur 1 zeigt schematisch eine elektrische Maschine 1 gemäß einem Ausführungsbeispiel der Erfindung. Die elektrische Maschine 1 weist einen Rotor 3 und einen Stator 2 auf. Der Stator 2 ist an einem Gehäuse 2a angeordnet, wobei an dem Gehäuse 2a eine Rotorwelle 3a drehbar gelagert ist, an der der Rotor 3 angebracht ist. Somit ist der Rotor 3 um eine Mittelachse 100 rotierbar, wobei die Mittelachse 100 auch eine Mittelachse des Stators 2 ist. Die elektrische Maschine 1 ist besonders vorteilhaft ein Antriebssystem für ein Fahrzeug, beispielsweise ein Automobil oder ein Fahrrad.

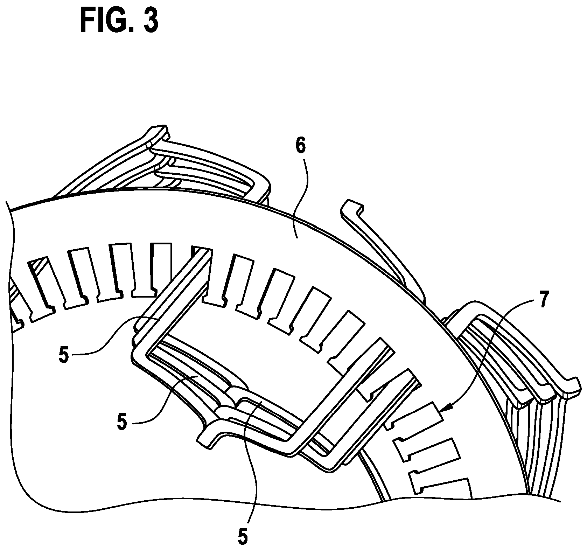

Figur 2 zeigt schematisch den Stator 2 der elektrischen Maschine 1 gemäß dem Ausführungsbeispiel der Erfindung. Der Stator 2 weist einen Statorgrundkörper 6 auf, an dem eine Steckwicklung 4 angebracht ist. Die Steckwicklung 4 ist aus einer Vielzahl von einzelnen starren isolierten elektrischen Leiterelementen 5 zusammengesetzt. Dies ist in Figur 3 gezeigt. So ist insbesondere eine Vielzahl von I-förmigen Leiterelementen 5 und/oder U-förmigen Leiterelementen 5 vorgesehen, wobei diese Leiterelemente 5 in Statornuten 7 des Statorgrundkörpers 6 gesteckt werden. Leiterenden 17 der elektrischen Leiterelemente 5 stehen aus den Statornuten 7 vor, wobei die Leiterenden 17 der Leiterelemente 5 mit Leiterenden 17 anderer Leiterelemente 5 passend verbunden werden, um die Steckwicklung 4 zu bilden, insbesondere um drei separate Wicklungsstränge an dem Statorgrundkörper 6 zu realisieren. Der Statorgrundkörper 6 ist vorteilhafterweise aus einer Vielzahl von Einzelblechen gestapelt, wobei Figur 3 der Einfachheit halber und zur besseren Übersichtlichkeit lediglich ein einziges dieser Statorbleche zeigt.

Durch eine derart aufgebaute Steckwicklung 4 ist erreicht, dass hohe elektrische Ströme durch die elektrischen Leiterelemente 5 fließen können. Insbesondere weisen die einzelnen Leiterelemente 5 einen im Vergleich zu herkömmlichen Leitern vergrößerten Querschnitt auf. Insbesondere ist ein rechteckiger Querschnitt vorhanden. Dadurch ist eine Stromtragfähigkeit der einzelnen Leiterelemente 5 erhöht, wodurch die elektrische Maschine 1 eine hohe Ausgangsleistung aufweist.

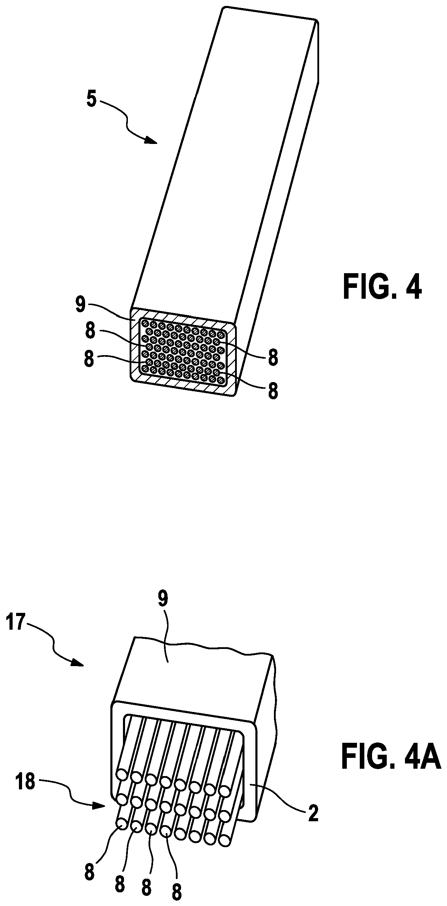

Figur 4 zeigt einen Schnitt durch eines der isolierten elektrischen Leiterelemente 5, die zur Herstellung der Steckwicklung 4 verwendet werden. Das elektrische Leiterelement 5 ist im in Figur 2 gezeigten Ausführungsbeispiel I-förmig. Figur 4A zeigt einen Endbereich des Leiterelements 5.

Das isolierte elektrische Leiterelement 5 umfasst eine Vielzahl von biegeschlaffen elektrisch leitfähigen Fasern 8, insbesondere eines Leiterstrangs aus biegeschlaffen Fasern 8, aus Kohlenstoff-Nano-Röhrchen (Carbon Nano Tubes (CNT)). Die biegeschlaffen Fasern 8 sind innerhalb eines hülsenförmigen oder schlauchförmigen und im Wesentlichen starren elektrisch isolierenden Isolationsmantels 9 angeordnet. Der Isolationsmantel 9 ist vorzugsweise aus Kunststoff, insbesondere aus Polyetheretherketon (PEEK), gebildet.

An den Leiterenden 17 des Leiterelements 5 ragen Faserenden 18 der Fasern 8 aus dem Isolationsmantel 9 heraus und sind somit elektrisch nicht isoliert. Diese Faserenden 18 dienen insbesondere zum elektrischen Verbinden zweier Leiterelemente 5 zum Herstellen der Steckwicklung 4 wie zuvor beschrieben.

Die biegeschlaffen Fasern 8 weisen bevorzugt textiles Verhalten auf. Somit lassen sich die biegeschlaffen Fasern 8 bevorzugt mit einer hohen Fülldichte in dem Isolationsmantel 9 anordnen. Durch den Isolationsmantel 9 ist somit die Form des Leiterelements 5 festgelegt, da der starre Isolationsmantel 9 dem Leiterelement 5 eine starre Form verleiht. Durch die Vielzahl von biegeschlaffen Fasern 8 ist außerdem eine hohe Stromtragfähigkeit gegeben, während aufgrund der Verwendung von Kohlenstoff-Nano-Röhrchen eine geringe Dichte und damit ein geringes Gewicht des Leiterelements 5 vorhanden ist. Dies erlaubt die elektrische Maschine 1 mit einer hohen Leistungsdichte bereitzustellen.

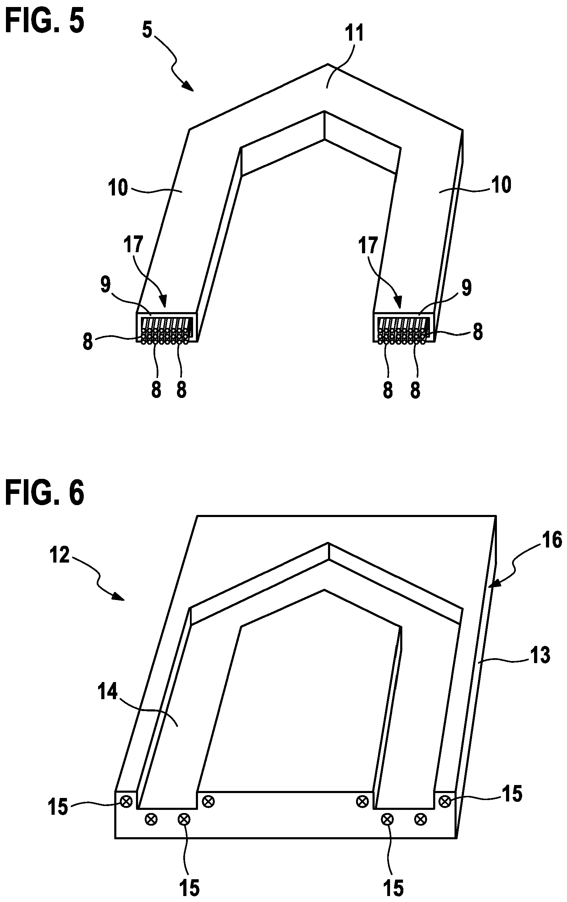

Figur 5 zeigt ein weiteres Ausführungsbeispiel eines isolierten elektrischen Leiterelements 5 mit einer Vielzahl von biegeschlaffen Fasern 8. Im Gegensatz zu dem in Figur 4 gezeigten Ausführungsbeispiel ist das isolierte elektrische Leiterelement 5 gemäß Figur 5 U-förmig.

Das U-förmige isolierte elektrische Leiterelement 5 umfasst zwei Schenkel 10, die durch einen Querbereich 11 verbunden sind. Mit Ausnahme der Form unterscheidet sich der Aufbau des in Figur 4 gezeigten Ausführungsbeispiels des Leiterelements 5 nicht von dem in Figur 5 gezeigten Ausführungsbeispiel des Leiterelements 5. So ist auch in Figur 5 ein hülsenförmiger oder schlauchförmiger Isolationsmantel 9 dargestellt, in dem mehrere biegeschlaffen Fasern 8 angeordnet sind. Die biegeschlaffen Fasern 8 erstrecken sich somit von einem Schenkel 10 über den Querbereich 11 zu dem anderen Schenkel 10 und ragen an Leiterenden 17 an den Schenkeln 10 mit Faserenden 18 aus dem Isolationsmantel 9 heraus. Die Vorteile des elektrischen Leiterelements 5 gemäß dem in Figur 5 dargestellten Ausführungsbeispiel sind dieselben wie die des in Figur 4 dargestellten Ausführungsbeispiels des elektrischen Leiterelements 5.

In beiden Ausführungsbeispielen lassen sich die Leiterenden 17 der Leiterelemente 5 elektrisch kontaktieren, um das jeweilige Leiterelement 5 mit anderen Komponenten elektrisch zu verbinden. Insbesondere können die Leiterelemente 5 untereinander kontaktiert werden, um die Steckwicklung 4 herzustellen. Somit lassen sich die Leiterelemente 5 insbesondere wie herkömmliche Teile einer Steckwicklung verwenden.

Figur 6 zeigt eine Formgebungsvorrichtung 12 zur Herstellung der bereits beschriebenen isolierten elektrischen Leiterelementen 5 gemäß einem erfindungsgemäßen Verfahren. Die beispielhaft gezeigte Formgebungsvorrichtung 12 dient insbesondere zur Herstellung des in Figur 5 gezeigten isolierten elektrischen Leiterelements 5.

Die Formgebungsvorrichtung 12 weist einen Grundkörper 13 und eine in dem Grundkörper 13 ausgebildete Vertiefung 14 auf. Die Vertiefung 14 verläuft U-förmig und weist insbesondere eine quadratische oder rechteckige Querschnittsform auf. Ferner ist auch ein anderer Verlauf der Vertiefung 14 denkbar, insbesondere ein I-förmiger Verlauf zur Herstellung des in Figur 4 gezeigten isolierten elektrischen Leiterelements 5.

Die Formgebungsvorrichtung 12 umfasst eine Vielzahl von Heizelementen 15, die an dem Grundkörper 13 befestigt sind und die um die Vertiefung 14 herum verteilt angeordnet sind. Die Heizelemente 15 weisen bevorzugt eine längliche Form auf, die entlang der Vertiefung 14 verlaufen. Denkbar ist es jedoch auch, eine Vielzahl von punktuellen Heizelementen 15 entlang der Vertiefung 14 anzuordnen.

Die Heizelemente 15 sind bevorzugt als Thermoelemente ausgeführt. Alternativ können sie jedoch auch eine Bauart, beispielsweise als Heizdraht, aufweisen. Die Heizelemente 15 sind bevorzugt in dem Grundkörper 13 eingeschraubt. Denkbar ist jedoch auch eine Steckverbindung zwischen den Heizelementen 15 und dem Grundkörper 13.

Zur Herstellung der isolierten elektrischen Leiterelemente 5 wird zunächst eine Vielzahl von elektrisch leitfähigen biegeschlaffen Fasern 8 durch einen Isolationsmantel 9 geführt. Der Isolationsmantel 9 ist hülsenförmig oder schlauchförmig mit einer eckigen oder runden Querschnittsform und muss zu diesem Zeitpunkt noch nicht die finale Form des Leiterelements 5 aufweisen. Anschließend wird der Isolationsmantel 9 mit den darin angeordneten biegeschlaffen Fasern 8 in die in dem Grundkörper 13 der Formgebungsvorrichtung 12 ausgebildete Vertiefung 14 angeordnet.

Nachdem der Isolationsmantel 9 und die biegeschlaffen Fasern 8 in der Vertiefung 14 angeordnet wurden, wird der Isolationsmantel 9 mittels der Heizelemente 15 erwärmt.

Der Isolationsmantel 9 ist vorzugsweise ein thermoplastischer Kunststoff, insbesondere Polyetheretherketon (PEEK). Dabei wird der Isolationsmantel 9 bei der Herstellung der Leiterelement 5 bis in den thermoplastischen Bereich erwärmt. Der thermoplastische Bereich ist der Temperaturbereich, in dem der erwärmte Isolationsmantel 9 plastisch verformt bleibt, d.h. seine ursprüngliche Form nicht wieder einnimmt.

Anschließend wird die Wärmezufuhr mittels der Heizelemente 15 unterbrochen, sodass der Isolationsmantel 9 bevorzugt aushärten kann. Das Aushärten kann passiv geschehen, d.h. die Abkühlung des Isolationsmantels 9 erfolgt nur durch die Unterbrechung der Wärmezufuhr und somit ohne zusätzliche Maßnahmen. Das Aushärten kann jedoch auch aktiv ausgeführt werden, beispielsweise mit zusätzlichen Kühlelementen und/oder mit Mitteln, die erzwungene Konvektion bewirken. Bevorzugt bleibt beim Aushärten in beiden Fällen der Isolationsmantel 9 in der Vertiefung 14, um ein vollständiges Ausbilden des Leiterelements 5 zu ermöglichen. Dadurch bekommt das Leiterelement 5 eine hohe Fülldichte.

Anschließend kann das Leiterelement 5, welches die Form der Vertiefung 14 im Wesentlichen beibehält, einstückig aus der Vertiefung 14 entfernt werden. Das Leiterelement 5 weist nun die durch das Verfahren bewirkte fixierte Form auf.

Der Isolationsmantel 9 ist bevorzugt ein Schrumpfschlauch und/oder ist aus einem Material gefertigt, das einen negativen Temperaturausdehnungskoeffizienten aufweist. Somit ist der Isolationsmantel 9 bevorzugt thermisch auf die Vielzahl von biegeschlaffen Fasern 8 aufgeschrumpft und bevorzugt ausgebildet, bei Erwärmung durch die Heizelemente 15 eine Spannkraft auf die innerhalb des Isolationsmantels 9 befindlichen biegeschlaffen Fasern 8, insbesondere den Leiterstrang, aufzubringen. Somit erfolgt eine dichte Packung der Fasern 8 und damit eine hohe Fülldichte des Leiterelements 5. Zusammen mit der geringen dichte von Kohlenstoffnanoröhrchen kann somit eine hohe Stromtragfähigkeit der aus den Leiterelementen 5 gebildeten Steckwicklung 4 bei gleichzeitig geringem Gewicht erreicht werden. Die elektrische Maschine 1 weist damit eine hohe Leistungsdichte auf.

## Patentansprüche

1. Elektrische Maschine (1) mit einem Rotor (3) und einem Stator (2), wobei der Stator (2) und/oder der Rotor (3) eine elektrische Steckwicklung (4) aufweist, die mehrere starre isolierte elektrische Leiterelemente (5) umfasst, wobei die Leiterelemente (5) in Nuten des Stators (2) oder des Rotors (3) angeordnet sind und mit Leiterenden (17) aus den Nuten vorstehen, wobei die Leiterenden (17) der Leiterelemente (5) jeweils mit Leiterenden (17) anderer der Leiterelemente (5) zur Bildung der elektrischen Steckwicklung (4) verbunden sind, wobei die Leiterelemente (5) einen elektrisch isolierenden Isolationsmantel (9) aufweisen, **dadurch gekennzeichnet, dass** jedes Leiterelement (5) eine Vielzahl von biegeschlaffen Fasern (8), insbesondere eines Leiterstrangs von biegeschlaffen Fasern (8), aus Kohlenstoff-Nanoröhrchen oder Graphen umfasst und dass der Isolationsmantel (9) die Vielzahl von Fasern (8) schlauchförmig umschließt und derart ausgebildet ist, dass er dem elektrischen Leiterelement (5) eine starre Form verleiht.

2. Elektrische Maschine (1) nach Anspruch 1, **dadurch gekennzeichnet, dass** der Isolationsmantel (9) thermisch auf die Vielzahl von biegeschlaffen Fasern (8) aufgeschrumpft ist.

3. Elektrische Maschine (1) nach einem der vorhergehenden Ansprüche, **dadurch gekennzeichnet, dass** der Isolationsmantel (9) die Vielzahl von biegeschlaffen Fasern (8), insbesondere den Leiterstrang, im Isolationsmantel (9) mit einer Spannkraft verspannt.

4. Elektrische Maschine (1) nach einem der vorhergehenden Ansprüche, **dadurch gekennzeichnet, dass** der Isolationsmantel (9) aus einem thermoplastischen Kunststoff, insbesondere aus Polyetheretherketon, gebildet ist.

5. Elektrische Maschine (1) nach einem der vorhergehenden Ansprüche, **dadurch gekennzeichnet, dass** der Isolationsmantel (9) aus einem Isolationsmaterial besteht, das einen negativen Ausdehnungskoeffizienten aufweist.

6. Elektrische Maschine (1) nach einem der vorhergehenden Ansprüche, **dadurch gekennzeichnet, dass** jedes Leiterelement (5) U-förmig oder I-förmig ausgebildet ist und einen viereckigen, insbesondere rechteckigen, Querschnitt aufweist.

7. Elektrische Maschine (1) nach einem der vorhergehenden Ansprüche, **dadurch gekennzeichnet, dass** die biegeschlaffen Fasern (8), insbesondere der Leiterstrang, jedes Leiterelements (5) an den beiden Leiterenden (17) des jeweiligen Leiterelements (5) mit biegeschlaffen Faserenden (18) aus dem jeweiligen Isolationsmantel (9) herausragen, um das jeweilige Leiterelement (5) mit anderen der Leiterelemente (5) elektrisch zu verbinden.

8. Verfahren zur Herstellung von im Wesentlichen starren isolierten elektrischen Leiterelementen (5) für eine Steckwicklung (4) für einen Rotor (3) und/oder einen Stator (2) einer elektrischen Maschine (1), insbesondere einer elektrischen Antriebsmaschine für ein elektrisch angetriebenes Fahrzeug, mit folgenden Schritten:
- Umschließen eines Strangs von biegeschlaffen Fasern (8) aus Kohlenstoff-Nanoröhrchen oder Graphen mit einem schlauchförmigen Isolationsmantel (9) unter Bildung eines Leiterelements (5),
- Anordnen des Leiterelements (5) in einer formgebenden Vertiefung (14) einer Formgebungsvorrichtung (12),
- Erwärmen des Leiterelementes (5) in der Vertiefung der Formgebungsvorrichtung (12) mittels mindestens eines Heizelements (15), auf eine Temperatur, die ein thermisches Aufschrumpfen, insbesondere eine Kontraktion, des Isolationsmantels (9) bewirkt, und
- Abkühlen des Leiterelements (5).

## Claims

1. Electric machine (1) having a rotor (3) and a stator (2), wherein the stator (2) and/or the rotor (3) has an electrical plug-in winding (4), which comprises a plurality of rigid insulated electrical conductor elements (5), wherein the conductor elements (5) are arranged in grooves of the stator (2) or the rotor (3) and project out of the grooves with their conductor ends (17), wherein the conductor ends (17) of the conductor elements (5) are each connected to conductor ends (17) of other conductor elements (5) to form the electrical plug-in winding (4), wherein the conductor elements (5) have an electrically insulating insulation sheath (9), **characterized in that** each conductor element (5) comprises a multiplicity of flexible fibres (8), in particular of a conductor bundle of flexible fibres (8), made of carbon nanotubes or graphene, and **in that** the insulation sheath (9) tubularly surrounds the multiplicity of fibres (8) and is designed in such a way that it gives the electrical conductor element (5) a rigid form.

2. Electric machine (1) according to Claim 1, **characterized in that** the insulation sheath (9) is thermally shrunk onto the multiplicity of flexible fibres (8).

3. Electric machine (1) according to one of the preceding claims, **characterized in that** the insulation sheath (9) braces the multiplicity of flexible fibres (8), in particular the conductor bundle, in the insulation sheath (9) with a tensile force.

4. Electric machine (1) according to one of the preceding claims, **characterized in that** the insulation sheath (9) is formed from a thermoplastic material, in particular from polyether ether ketone.

5. Electric machine (1) according to one of the preceding claims, **characterized in that** the insulation sheath (9) consists of an insulation material which has a negative coefficient of expansion.

6. Electric machine (1) according to one of the preceding claims, **characterized in that** each conductor element (5) is designed in a U shape or I shape and has a quadrangular, in particular rectangular, cross section.

7. Electric machine (1) according to one of the preceding claims, **characterized in that** the flexible fibres (8), in particular the conductor bundle, of each conductor element (5) project out of the respective insulation sheath (9) with their flexible fibre ends (18) at the two conductor ends (17) of the respective conductor element (5) in order to electrically connect the respective conductor element (5) to other conductor elements (5).

8. Method for producing substantially rigid insulated electrical conductor elements (5) for a plug-in winding (4) for a rotor (3) and/or a stator (2) of an electric machine (1), in particular an electric drive machine for an electrically driven vehicle, having the following steps:
- surrounding a bundle of flexible fibres (8) made of carbon nanotubes or graphene with a tubular insulation sheath (9) to form a conductor element (5),
- arranging the conductor element (5) in a shaping depression (14) of a shaping device (12),
- heating the conductor element (5) in the depression of the shaping device (12) by means of at least one heating element (15) to a temperature which effects thermal shrinking, in particular a contraction, of the insulation sheath (9), and
- cooling the conductor element (5).

## Revendications

1. Machine électrique (1) avec un rotor (3) et un stator (2), le stator (2) et/ou le rotor (3) comportant un enroulement électrique enfichable (4), qui comprend plusieurs éléments conducteurs (5) électriques isolés rigides, les éléments conducteurs (5) étant disposés dans des rainures du stator (2) ou du rotor (3) et faisant saillie des rainures par des extrémités (17) de conducteurs, les extrémités (17) de conducteurs des éléments conducteurs (5) étant reliées chacune à des extrémités (17) de conducteurs d'autres des éléments conducteurs (5) pour former l'enroulement électrique enfichable (4), les éléments conducteurs (5) comportant une gaine isolante (9) électriquement isolante, **caractérisée en ce que** chaque élément conducteur (5) comprend une pluralité de fibres souples (8), en particulier un brin conducteur de fibres souples (8), composé de nanotubes de carbone ou de graphène, et que la gaine isolante (9) entoure la pluralité de fibres (8) de manière tubulaire et est formée de telle manière qu'elle confère une forme rigide à l'élément conducteur (5) électrique.

2. Machine électrique (1) selon la revendication 1, **caractérisée en ce que** la gaine isolante (9) est thermiquement rétractée sur la pluralité de fibres souples (8).

3. Machine électrique (1) selon l'une des revendications précédentes, **caractérisée en ce que** la gaine isolante (9) serre la pluralité de fibres souples (8), en particulier le brin conducteur, dans la gaine isolante (9) avec une force de serrage.

4. Machine électrique (1) selon l'une des revendications précédentes, **caractérisée en ce que** la gaine isolante (9) est formée à partir d'une matière thermoplastique, en particulier de polyétheréthercétone.

5. Machine électrique (1) selon l'une des revendications précédentes, **caractérisée en ce que** la gaine isolante (9) est constituée d'un matériau isolant, qui présente un coefficient de dilatation négatif.

6. Machine électrique (1) selon l'une des revendications précédentes, **caractérisée en ce que** chaque élément conducteur (5) est formé avec une forme de U ou de I et comporte une section transversale quadrangulaire, en particulier rectangulaire.

7. Machine électrique (1) selon l'une des revendications précédentes, **caractérisée en ce que** les fibres souples (8), en particulier le brin conducteur, de chaque élément conducteur (5) font saillie hors de la gaine isolante (9) respective sur les deux extrémités (17) de conducteur de l'élément conducteur (5) respectif avec des extrémités de fibres souples (18) pour relier électriquement l'élément conducteur (5) respectif à un autre des éléments conducteurs (5).

8. Procédé de fabrication d'éléments conducteurs (5) électriques isolés sensiblement rigides pour un enroulement enfichable (4) pour un rotor (3) et/ou un stator (2) d'une machine électrique (1), en particulier d'une machine d'entraînement électrique pour un véhicule à entraînement électrique, avec les étapes suivantes :
- placement d'une gaine isolante (9) tubulaire autour d'un brin de fibres souples (8) composé de nanotubes de carbone ou de graphène en formant un élément conducteur (5),
- disposition de l'élément conducteur (5) dans un renfoncement (14) de mise en forme d'un dispositif de mise en forme (12),
- chauffage de l'élément conducteur (5) dans le renfoncement du dispositif de mise en forme (12) au moyen d'au moins un élément chauffant (15) à une température, qui provoque une rétraction thermique, en particulier une contraction, de la gaine isolante (9), et
- refroidissement de l'élément conducteur (5).
